# EUROPEAN PATENT APPLICATION

(11) **EP 1 724 149 A1**
(43) Date of publication of application: **22.11.2006**
(21) Application number: 05010998.2
(22) Date of filing: 20.05.2005
(51) Int. Cl.: B60N 2/235

(54) **Core part of flat spring recliner for auto seat angle adjustment**

(71) Applicant: Luo, Xianhu, Xiangfan Hubei 441003 (CN); Huang, ZhengKun, XiangFan Hubei 441003 (CN)
(72) Inventor: Luo, Xianhu, Xiangfan Hubei 441003 (CN); Huang, ZhengKun, XiangFan Hubei 441003 (CN)
(74) Representative: Martin, Didier Roland Valéry

(57) **Abstract**

- Core part of flat spring recliner for auto seat angle adjustment.
- A core part of a kind of flat spring recliner, comprising a ratchet gear piece (2), a cam unit (5,13,12,33), a return spring (31) and a cover (1), wherein :
- the cam unit (5,13,12,33) can be further divided into a runner plate (33), a slider piece (12), a locking cam (13) and an unlocking cam (5) which is placed in the lower sink (25) of the ratchet gear (2),
- in the upper circle (4) of the ratchet gear (2), two segments (24) are geared in symmetry position,
- in the groove (22) inside the runner plate (33), there are two-geared (9) slider pieces (12) fitted to engage with the ratchet gear tooth (24),
- the sliders (12) are designed with bosses (8) on the surface, which match with the kidney slot (7) in the unlocking cam, and with a self-locking side (20) that is driven by the self-locking side (19) on the locking cam to move off center in translation,

in such a manner that when the slider pieces (12) engages with the two segments (24), self-locking sides (19,20) will lock up the core part and unlock otherwise.

## Description

### FIELD OF THE INVENTION

The present invention relates to a mechanism with the function of adjusting the seat back angle as well as achieving fold of seat in sedans or other vehicles.

### TECHNICAL BACKGROUND

Products under Chinese patent no.ZL99237062.0 and ZL01250171.9 are depicted as core part of flat-spring recliner that feature in high strength, broad adaptability, small clearance and are free of repair, whereas, they can not meet the requirement to adjust the angle of seat back and fold the seat at the same time.

Solution to the problem is found in another Chinese patented recliner core part no. ZL02139265.x, which, however, shows its own disadvantage in that the strength of major driven parts slider and cam is not enough to ensure a qualified static strength of recliner, nor are they capable of realizing central self aligning.

### CONTENTS OF THE INVENTION

The object of the present invention is to provide a seat recliner with high strength, central self-aligning function and above all, the advantage of realizing fold and angle adjusting of seat back at the same time.

In structure, the present invention is made up of two major components: double cam mechanism and ratchet gear mechanism. The cams work to lock or unlock the seat back by driving the sliders to move inward or outward in translation. And the ratchet gear work to lock or unlock the recliner through engagement or disengagement of gear teeth between the gear and slider.

The technical solution of the present invention: it is comprised of ratchet gear, cam unit, return spring which are packed together by the cover. As stated in the claims, the cam mechanism includes unlocking cam, locking cam, runner plate and slider. The ratchet gear bears two layer of circle in it, one upper and the other lower in which lies the unlocking cam. Two sections inside the upper circle are toothed in symmetry position to achieve the seat angle adjustment, leaving two other symmetrical sections without tooth to realize the quick folding function of seat. The sliders are put on two ends of the slider groove which goes through center of the plate. Opposite to the center side on the sliders, there are gear teeth to function engagement with ratchet gear. Driven by the unlocking cam, the slider moves inward and outward in translation and can achieve self-locking when the sliders engage with the ratchet and unlock when disengaged.

### With the above description, the present invention embodies in it the following features:

The locking cam is combined together with the unlocking cam with two bosses on the former fitted into correspondent holes in the latter.

The inner circle of runner plate matches with the outmost circular of the ratchet gear with a defined clearance, and the unlocking cam is allocated in the same way with the runner plate.

Within the self-locking section of locking cam, the friction angle always exceeds its lifting angle, ensuring a stable and reliable self-locking performance of the driving part.

The semi-pierced sink in the middle of runner plate is designed to locate the return spring with the purpose of reducing thickness of the whole core part. The return spring mentioned here is a scroll in shape, with the hooked head inserted into the hole in the runner plate and the other head winds around the square boss on the locking cam, the arrangement intends to tighten up the core setup. When working, the spring provides the force that sets the tendency for the slider and ratchet to engage with each other.

Adjusting increment is 1.93 degree/tooth.

The cover of the present invention also has two steps to act as the direct sheath for runner plate and ratchet gear respectively, and all the child parts are finally packed into a core part with the closing up of the cover.

The double cam mechanism provides a better solution to the imbalanced inner strengths.

When closed up with the cover, the core then becomes an integrated whole that cannot be taken apart and is free of repair. The core bears such high generality and stability that it can be fixed to various customer- specified mounting brackets in different vehicles. When fitted to auto seats, the recliner can stand much larger side torque.

Compared with other similar products, to sum up, this innovation features better in compact structure, small size, high strength, double sided unlocking capability, more precise angle adjusting as well as the ability to achieve center self aligning. Apart from the excellent angle setting function, this design also allows a quick fold of the seat back.

### BRIEF DESCRIPTION OF DRAWING

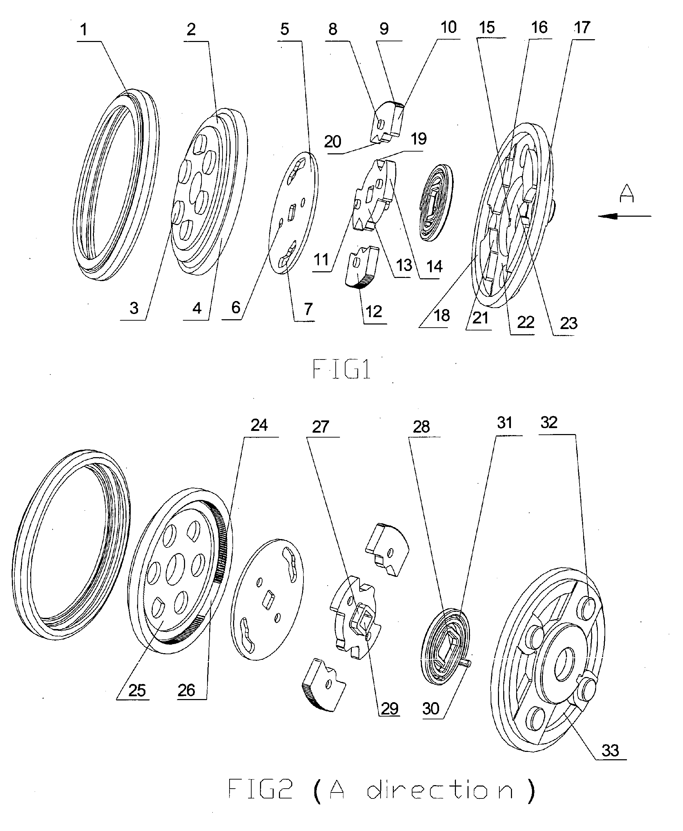

Figure 1 is the structural build of the present design and fig.2 shows fig. 1 in another direction.
   - (1): Cover
   - (2): Ratchet gear
   - (3): Round boss on ratchet gear
   - (4): Upper circle of ratchet gear
   - (5): Unlocking cam
   - (6): Hole in unlocking cam
   - (7): Kidney slot
   - (8): Round boss on slider
   - (9): Tooth on slider
   - (10): Side face of slider
   - (11): Round boss on locking cam
   - (12): Slider
   - (13): Locking cam
   - (14): External circle of locking cam
   - (15): Hole in runner plate
   - (16): Side face of runner plate
   - (17): External circle of runner plate
   - (18): Inner circle of runner plate

   - (19): Self-locking side on the locking cam
   - (20): Self-locking side on the slider
   - (21): Inner curve of runner plate
   - (22): Groove in runner plate
   - (23): Semi-pierced sink in runner plate
   - (24): Ratchet gear tooth (or geared segment)
   - (25): Lower step (or sink) in ratchet gear
   - (26): Smooth section
   - (27): Square boss on locking cam
   - (28): Inner coil in return spring
   - (29): Square hole
   - (30): Hooked spring head
   - (31): Return spring
   - (32): Semi-pierced round boss on runner plate
   - (33): Runner plate

### MODE OF CARRYING OUT THE INVENTION

The invention relates to a core part of a kind of flat spring recliner, comprising a ratchet gear piece 2, a cam unit 5, 13, 12, 33, a return spring 31 and a cover 1, wherein :
- the cam unit 5, 13, 12, 33 can be further divided into a runner plate 33, a slider piece 12, a locking cam 13 and an unlocking cam 5 which is placed in the lower sink 25 of the ratchet gear 2,
- in the upper circle 4 of the ratchet gear 2, two segments 24 are geared in symmetry position,
- in the groove 22 inside the runner plate 33, there are two-geared 9 slider pieces 12 fitted to engage with the ratchet gear tooth 24,
- the sliders are designed with bosses 8 on the surface, which match with the kidney slot 7 in the unlocking cam, and with self-locking side 20 that is driven by the self-locking side 19 on the locking cam to move off center in translation,
in such a manner that when the slider pieces 12 engages with the two segments 24, self-locking sides 19,20 will lock up the core part and unlock otherwise.

In other words, the invention relates to a kernel part of a kind of flat spring recliner, comprised of four major sub-components: ratchet gear piece, cam unit, return spring 31 and cover 1 is characterized in that the cam unit can be further divided into runner plate 33, slider piece 12, locking cam 13 and unlocking cam 5 which is placed in the lower sink of the ratchet gear 2, in the upper circle thereof, two segments 24 are geared in symmetry position. In the groove 22 inside the runner plate, there are two-geared 9 slider pieces 12 fitted to engage with the ratchet gear tooth 24. The sliders are designed with bosses 8 on the surface, which match with the kidney slot 7 in the unlocking cam, and with self-locking side 20 that is driven by the self-locking side 19 on the locking cam to move off center in translation.

When 9 engages completely with 24, 19 and 20 will lock up the core part and unlock otherwise.

In the two pictures as the arrows indicate: there are two steps on the ratchet gear 2. In the upper one, there are two geared sections 24 and two other smooth sections 26 in symmetry position, and in the lower one 25 lies the unlocking cam 5, along with it 5, locking cam 13, runner plate 33 and slider 12 together build up the cam mechanism.

Two sliders 12 are set in grooves 22 of the runner plate 33 and slider side face 10 meets with groove side face 16, on the opposite side of slider the teeth 9 can engage with ratchet gear teeth.

The sliders are designed with bosses 8 on the surface which match with the kidney slots 7 in the unlocking cam, and with self locking side on the slider 20 which is driven by the self locking side 19 on the locking cam to move outward in translation.

The semi-pierced bosses 11 match with the holes 6 and they join the two cams 5, 13 together.

The semi-pierced sink 23 in the middle of runner plate is designed to locate the return spring 31, with the hooked head 30 inserted into the hole 15 in the runner plate and the other head coiled 28 to wind around the square boss on the locking cam.

External circle 14 matches with curve 21, and circle 4 matches with inner circle 18.

Cover 1 has two steps to match with external circle of runner plate 17 and upper circle of ratchet gear 4.

All the child parts are finally packed into a core part with the closing up process of the cover.

When tooth 9 engages completely with geared sections 24, self locking side on the locking cam 19 and self-locking side on the slider 20 will lock up the core part and unlock otherwise.

### The function process:

The semi-pierced bosses 3 on ratchet gear 2 are fixed to the upper bracket, which is then mounted to the seat back, while in the same manner, the four round bosses 32 on runner plate 33 are fixed to the lower bracket which is tied to the seat cushion.

Apply torque, and the torque is transmitted through the square hole 29 in locking cam 13 to recliner core mechanism, where the cam 13 drives cam 5 to rotate clockwise, cam 5 pushes slider 12 to move center ward along groove in runner plate 22 by the joint efforts of kidney slot 7 and the boss 8 which is located in kidney slot 7.

For example, the torque may be applied on the locking cam 13 with a hand lever (not shown) that is mechanically connected to the locking cam 13.

The movement continues till tooth 9 and geared sections 24 declutch to enable ratchet gear 2 and runner plate 33 to turn freely along their matching surface, and that free movement helps to realize the seat angle adjustment.

When the seat is positioned to a proper angle, stop application of torque, and now return spring 31 will drive locking cam 13 to move clockwise, self-locking side on the locking cam 19 touches self-locking side on the slider 20 and with the force of their relative movement, unlocking cam 5 is pushed off centre along groove in runner plate 22 till tooth 9 completely engages with geared sections 24 and the lock formed between self-locking side on the locking cam 19 and self-locking side on the slider 20 helps fixing the seat at the chosen angle.

Additionally, the recliner can also realize a fold-flat function when tooth 9 is disengaged and is faced with the smooth section 26 where it can move freely without hindrance.

Thanks to the fold-flat function, the seat back can fold quickly onwards to a level position.

## Claims

1. A core part of a kind of flat spring recliner, comprising a ratchet gear piece (2), a cam unit (5, 13, 12, 33), a return spring (31) and a cover (1), wherein :
- the cam unit (5, 13, 12, 33) can be further divided into a runner plate (33), a slider piece (12), a locking cam (13) and an unlocking cam (5) which is placed in the lower sink (25) of the ratchet gear (2),
- in the upper circle (4) of the ratchet gear (2), two segments (24) are geared in symmetry position,
- in the groove (22) inside the runner plate (33), there are two-geared (9) slider pieces (12) fitted to engage with the ratchet gear tooth (24),
- the sliders are designed with bosses (8) on the surface, which match with the kidney slot (7) in the unlocking cam, and with self-locking side (20) that is driven by the self-locking side (19) on the locking cam to move off center in translation,
in such a manner that when the slider pieces (12) engages with the two segments (24), self-locking sides (19,20) will lock up the core part and unlock otherwise.

2. The core part according to claim 1, wherein the locking cam (13) is combined together with the unlocking cam (5) with two bosses (11) on the former fitted into correspondent holes (6) in the latter.

3. The core part according to claim 1 or 2 wherein, the circular sink face (18) inside the runner plate (33) matches with the outmost circular (4) face of the ratchet gear (2) with a defined clearance.

4. The core part according to any of claims 1 to 3, wherein the external circle of locking cam (14) is allocated with the inner curve of runner plate (21) in the same way as that of the inner circle of runner plate (18) and the upper circle of ratchet gear (4).

5. The core part according to any of claims 1 to 4, wherein within the self locking section of locking cam, the friction angle of self-locking surface (19) always exceeds its lifting angle, ensuring a stable and reliable self locking performance of the driving part.

6. The core part according to any of claims 1 to 5, wherein the semi-pierced sink (23) in the middle of runner plate (33) is designed to locate the return spring (31).

7. The core part according to any of claims 1 to 6, wherein the return spring (31) is a scroll in shape, with the hooked head (30) inserted into the hole (15) in the runner plate and the other head (28) winds around the square boss (27) on the locking cam, the arrangement intending to tighten up the core setup so that when at work, the spring (31) provides the force that sets the tendency for the slider (12) and ratchet (2) to engage with each other.

8. The core part according to any of claims 1 to 7, wherein adjusting increment is 1.93 degree/tooth.

9. The core part according to any of claims 1 to 8, wherein the cover (1) of the present invention has two steps to act as the direct sheath for runner plate and ratchet gear (4) respectively, and all the child parts are finally packed into a core part with the closing up of the cover.
